# EUROPEAN PATENT SPECIFICATION

(11) **EP 3 056 533 B1**
(45) Date of publication and mention of the grant of the patent: **27.05.2020**
(21) Application number: 14852907.6
(22) Date of filing: 08.09.2014
(51) Int. Cl.: C08J 3/22, C08K 3/08, C08L 23/06

(54) **MASTERBATCH, MASTERBATCH GROUP, PRODUCTION METHOD FOR MASTERBATCH, AND MOLDED SYNTHETIC RESIN ARTICLE**
MASTERBATCH, MASTERBATCHGRUPPE, HERSTELLUNGSVERFAHREN FÜR DAS MASTERBATCH UND GEFORMTER KUNSTHARZGEGENSTAND
MÉLANGE MAÎTRE, GROUPE DE MÉLANGES MAÎTRES, PROCÉDÉ DE PRODUCTION POUR MÉLANGE MAÎTRE ET ARTICLE EN RÉSINE SYNTHÉTIQUE MOULÉE

(30) Priority: 10.10.2013 JP 2013212902
(43) Date of publication of application: 17.08.2016
(73) Proprietor: RESINO COLOR INDUSTRY CO., LTD., Osaka-shi, Osaka 532-0028 (JP)
(72) Inventor: TAKEMURA Atsushi, Tokyo 130-0021 (JP); IMAMURA Hisako, Amagasaki-shi Hyogo 660-0806 (JP)
(74) Representative: Neymeyr, Ulrich Theodor Paul
(86) International application number: PCT/JP2014/073716
(87) International publication number: WO 2015/053025

(56) References cited:
- EP-A1- 2 351 784
- CN-A- 101 425 545
- CN-A- 101 805 457
- JP-A- H09 241 390
- JP-A- H09 255 816
- JP-A- H10 168 240
- JP-A- H11 124 478
- JP-A- 2000 248 072
- JP-A- 2002 283 350
- JP-A- 2002 338 635
- JP-A- 2010 095 681
- JP-A- 2010 121 092
- JP-B2- 3 022 027
- US-A- 5 814 697
- US-A- 5 932 325
- US-A1- 2001 016 627
- US-A1- 2008 249 211
- US-A1- 2009 250 103

## Description

### TECHNICAL FIELD

The present invention relates to a masterbatch, a masterbatch group, a method for producing the masterbatch, and a synthetic resin molded article.

### BACKGROUND ART

Mixing and kneading aluminum powder with a synthetic resin is a known method for coloring a synthetic resin to give a metallic finish. Aluminum particles having a plate-like shape or a spherical shape are commonly known, and plate-like particles can give high brightness with a glittering granular appearance because the flat and smooth surface of these particles uniformly reflect light.

Use of the aluminum powder by itself is associated with a risk of dust explosion. Thus, the aluminum powder is usually wetted by a solvent such as mineral turpentine before use.

In the case where such aluminum powder that has been wetted by a solvent is mixed and kneaded with a synthetic resin, it causes the solvent to remain in the synthetic resin. Thus, the residual solvent will be volatilized into a gas during formation of a synthetic resin molded article using such a synthetic resin. This may impair the strength or appearance of the synthetic resin molded article. The residual solvent in the synthetic resin can be removed by heating during production of the synthetic resin molded article; however, it has been difficult to completely remove the solvent by this method.

In addition, the aluminum particles have poor affinity for the resin. Thus, despite attempts to disperse the aluminum particles in the resin, the aluminium particles cannot be sufficiently dispersed, resulting in color unevenness or agglomerations of the aluminum particles.

In order to solve these problems, there has been proposed a method for coloring a synthetic resin using masterbatches substantially free of a solvent which are obtained by solidifying aluminum powder with wax.

As examples of such masterbatches, Patent Literature 1 discloses an aluminum powder-containing resin composition (masterbatch) obtained by mixing an olefin resin, aluminum powder, olefin wax, and quicklime, wherein the aluminum powder content is 40%.

Patent Literature 2 discloses a masterbatch for coloring a synthetic resin, the masterbatch containing an aluminum pigment, polyethylene wax, and a linear low density polyethylene resin, wherein the aluminum pigment is contained in an amount of 60 to 80% by mass, and the polyethylene wax and the linear low density polyethylene resin are contained at a mass ratio of 9:1 to 7:3.

### CITATION LIST

### - Patent Literature

Patent Literature 1: JP-A H06-220257
Patent Literature 2: JP-A 2010-121092

US 2008/249211 A1 discloses a masterbatch composition which includes a colorant, a thermoplastic carrier, a metallocene polymer processing aid, and optionally an additive, as well as a method for making a masterbatch composition and a method for making a colorized polymer.

### SUMMARY OF INVENTION

### - Technical Problem

The masterbatch disclosed in Patent Literature 1 contains an aluminum component only in a small amount. Thus, a large amount of masterbatches must be added if it is desired to increase the amount of the aluminum component in a synthetic resin molded article. In this case, the synthetic resin molded article will end up containing, besides the aluminum component, a large amount of an essentially unnecessary masterbatch component. A large amount of such an unnecessary masterbatch component may impair the strength or appearance of the synthetic resin molded article produced using the masterbatches. Further, an increase in the amount of the aluminum component in each masterbatch reduces the pellet strength of each masterbatch, making the masterbatches difficult to handle.

The masterbatch disclosed in Patent Literature 2 contains a large amount of an aluminum component, but also contains a large amount of polyethylene wax which may impair the strength or appearance of a synthetic resin molded article produced using the masterbatches.

In addition, use of a large amount of polyethylene wax reduces the pellet strength of each masterbatch, so that fine powder is easily generated as a result of cracking of the masterbatch, and the pellet shape tends to be irregular. Resin particles to be colored tend to separate from the fine power of the masterbatches in the step of forming a synthetic resin molded article because of the difference in particle size. This has been a cause of color unevenness of a synthetic resin molded article.

In addition, Patent Literature 1 and Patent Literature 2 both disclose that the masterbatch production involves a heat-mixing step to remove a solvent used as a wetting agent for the aluminum particles; and a pellet molding step. Masterbatch components are heated and dispersed in each of these two steps. Thus, the masterbatch components are prone to thermal degradation, resulting in low strength or a poor appearance of a synthetic resin molded article. Further, the shape of the plate-like aluminum particles will be cracked, bent, or broken if the particles are subjected to excessive mechanical shear during masterbatch processing. Once the aluminum particles are broken as described above, the aluminum particles tend to reduce their inherent brightness.

The present invention was made in view of the above problems. The present invention aims to provide a masterbatch containing a large amount of an aluminum component and having high pellet strength, wherein aluminum particles retain their inherent brightness and the amount of a component which may impair the strength or appearance of a synthetic resin molded article is small. The present invention also aims to provide a masterbatch group including a plurality of the masterbatches, a method for producing the masterbatch, and a synthetic resin molded article produced using the masterbatch or the masterbatch group.

### - Solution to Problem

The present inventors carried out extensive studies to solve the above problems. As a result, they found that it is possible to obtain a masterbatch containing a large amount of an aluminum component and having high pellet strength, wherein aluminum particles retain their inherent brightness and the amount of a component which may impair the strength or appearance of a synthetic resin molded article is small, by the following method: wetting aluminum particles by a heat-resistant wetting agent; mixing the aluminum particles with a resin having a melt flow rate of 0.2 to 60 g/10 min and optionally a wax; and adjusting the proportion of wax in the masterbatch to be in a certain range, the wax having a melt flow rate of more than 60 g/10 min and a melt viscosity at 140°C of 15 to 8000 mPa·s as measured by a Brookfield viscosity. The present invention was thus completed.

Specifically, a first embodiment of the present invention relates to a masterbatch comprising:
aluminum particles;
a heat-resistant wetting agent;
a resin; and
optionally a wax,
wherein the proportion of the aluminum particles in the masterbatch is 50 to 80% by weight,
the resin has a melt flow rate of 0.2 to 60 g/10 min, and
the proportion of wax having a melt flow rate of more than 60 g/10 min and a melt viscosity at 140°C of 15 to 8000 mPa·s in the masterbatch is 10% by weight or less, wherein
in the case of the heat-resistant wetting agent having a boiling point, the heat-resistant wetting agent is one having a boiling point of 250°C or higher,
in the case of the heat-resistant wetting agent that are volatilized into a gas by pyrolysis before boiling, the heat-resistant wetting agent is one having an intermediate pyrolysis temperature of 250 °C or higher in a nitrogen atmosphere, wherein the intermediate pyrolysis temperature is determined according to JIS K 7120 using a thermogravimetric balance,
wherein the resin is selected from the group consisting of polyolefin resin, polyacetal resin, polystyrene resin, acrylonitrile resin, ABS resin, PMMA resin, polycarbonate resin, PBT resin, and/or PET resin,
the wax is selected from the group consisting of polyethylene wax, polypropylene wax, paraffin wax, microcrystalline wax, Fischer-Tropsch wax and carnauba wax, and/or products obtained by modifying these waxes with acid, and the heat-resistant wetting agent is selected from the group consisting of polyethylene glycols, triphenyl phosphate, bis(2-ethylhexyl)phthalate, dibutyl phthalate, bis(2-ethylhexyl)adipate, dibutyl adipate, bis(2-ethylhexyl)sebacate and dibutyl sebacate, wherein
the melt flow rate is measured according to JIS K 7210: 1999 (ISO 1333: 1997) at a temperature of 190°C and a load of 2.16 kg and the melt viscosity is measured with a Brookfield viscometer at a temperature of 140°C.

Preferably, in the masterbatch of the present invention, the aluminum particles are surface-coated aluminum particles.

Preferably, the masterbatch of the present invention further contains a melt tension improver which is selected from the group consisting of a fluorine-based melt tension improver and/or an acrylic melt tension improver.

Preferably, in the masterbatch of the present invention, the resin contains a high melt tension resin having a melt tension at 190°C of 30 to 200 mN.

Preferably, in the masterbatch of the present invention, the resin is a polymer alloy having a melt tension at 190°C of 20 to 100 mN.

Preferably, the masterbatch of the present invention further contains a metal deactivator selected from the group consisting of a triazine-based compound and/or a phenolic compound.

A second embodiment of the present invention relates to a masterbatch group including a plurality of the masterbatches, wherein each masterbatch has a pellet shape, the plurality of the masterbatches included in the masterbatch group has a relative standard deviation of the major axis of 5.00% or less, the plurality of the masterbatches included in the masterbatch group has a relative standard deviation of the minor axis of 5.00% or less, and the plurality of the masterbatches included in the masterbatch group has a relative standard deviation of the length of 5.00% or less.

Preferably, in the masterbatch group of the present invention, the average major axis of the plurality of the masterbatches included in the masterbatch group is 2.0 to 4.0 mm, the average minor axis of the plurality of the masterbatches included in the masterbatch group is 2.0 to 4.0 mm, and the average length of the plurality of the masterbatches included in the masterbatch group is 2.0 to 4.0 mm.

A third embodiment of the present invention relates to a method for producing the masterbatch as defined in claim 9.

Preferably, in the method for producing the masterbatch of the present invention, the mixing step is carried out without using a stirring member.

Preferably, in the method for producing the masterbatch of the present invention, the mixing step is carried out at 80°C or lower, and the extruding step is carried out at 150 to 250°C.

Preferably, in the method for producing the masterbatch of the present invention, the mixing step is carried out using surface-coated aluminum particles as the aluminum particles.

A fourth embodiment of the present invention relates to a synthetic resin molded article produced using the masterbatch or the masterbatch group.

### - Advantageous Effects of Invention

The masterbatch of the present invention contains aluminum particles, a heat-resistant wetting agent, a resin having a melt flow rate of 0.2 to 60 g/10 min and optionally a wax. The proportion of the aluminum particles in the masterbatch is 50 to 80% by weight while maintaining a high pellet strength. Namely, the masterbatch can have a high aluminum particle concentration while maintaining a high pellet strength. If the pellet strength of each masterbatch is high, the amount of fine powder to be generated from broken masterbatches due to vibration, contact, or the like will be small. Thus, each masterbatch has a uniform pellet shape, and these masterbatches are less likely to be non-uniformly dispersed during synthetic resin molded article processing. As a result, it is possible to suppress color unevenness attributable to non-uniform dispersion of the masterbatches during synthetic resin molded article processing.

In the masterbatch of the present invention, the proportion of the aluminum particles in the masterbatch is 50 to 80% by weight. Thus, it is possible to reduce the amount of a masterbatch component other than the aluminum component in a synthetic resin molded article. Thus, the masterbatch is less likely to result in low strength or a poor appearance of the synthetic resin molded article.

Further, the proportion of the wax having a melt flow rate of more than 60 g/10 min and a melt viscosity at 140°C of 15 to 8000 mPa·s in the masterbatch of the present invention is 10% by weight or less. Thus, the masterbatch is less likely to result in low strength or a poor appearance of a synthetic resin molded article.

### BRIEF DESCRIPTION OF DRAWINGS

Fig. 1 is a schematic perspective view of a masterbatch of the present invention which is formed to have a pellet shape.
Fig. 2 is an image of a masterbatch group according to Example 1.
Fig. 3 is an image of a masterbatch group according to Comparative Example 2.
Fig. 4(a) is a 1000 times magnified microscopic image of the shape of aluminum particles in a synthetic resin molded article formed using the masterbatches according to Example 1. Fig. 4(b) is a 3000 times magnified image.
Fig. 5(a) is a 1000 times magnified microscopic image of the shape of aluminum particles in a synthetic resin molded article formed using the masterbatches according to Comparative Example 2. Fig. 5(b) is a 3000 times magnified image.
Fig. 6(a) is a 1000 times magnified microscopic image of the shape of aluminum particles in an aluminum paste. Fig. 6(b) is a 3000 times magnified image.

### DESCRIPTION OF EMBODIMENTS

The proportion of the aluminum particles in the masterbatch of the present invention is 50 to 80% by weight. The proportion of the aluminum particles is more preferably 60 to 80% by weight, still more preferably 65 to 80% by weight.

If the proportion of the aluminum particles in the masterbatch is more than 80% by weight, each masterbatch will have lower pellet strength and will be susceptible to cracking, chipping, or the like. Thus, the masterbatches will be difficult to handle. Further, fine fragments or powder may result from cracking, chipping, or the like. Such fine fragments or powder tends to cause color unevenness in a synthetic resin molded article. In addition, such fragments or powder of the masterbatches may remain in a container when moving the masterbatches from the container. In other words, the fragments or powder of the masterbatches may not be used for production of a synthetic resin molded article. Thus, generation of fragments or powder of the masterbatches is economically disadvantageous.

If the proportion of the aluminum particles in each masterbatch is less than 50% by weight, a masterbatch component other than the aluminum component is necessarily added in a large amount to produce a synthetic resin molded article. Such a masterbatch component may impair the strength or appearance of the synthetic resin molded article produced using such masterbatches.

It is preferred that the aluminum particles contained in the masterbatch of the present invention have a uniform shape and a smooth surface without being broken or bent and that the aluminum particles are not agglomerated by overlapping.

Breaking or bending of the aluminum particles creates bumps on the surface of the aluminum particles, thus diffusing light. The diffused light is absorbed at the interface of another aluminum particle, thus decreasing the brightness. In addition, the aluminum particles that are broken or bent into small pieces cannot provide a glittering and clear grainy appearance.

The aluminum particles that are not broken or bent can sufficiently increase the brightness of the masterbatch. Thus, a synthetic resin molded article produced using the masterbatches of the present invention can be provided with a clear metallic luster.

The average particle size of the aluminum particles is not limited, but it is preferably 5 to 100 µm, more preferably 5 to 50 µm.

The shape of the aluminum particles is not limited, but plate-like particles having a flake shape or a coin shape are preferred. The term "plate-like particles" refers to the particles having a shape in which the ratio of the average particle size to the average thickness (average particle size:average thickness) is 5:1 to 1000:1. If the aluminum particles has a plate-like shape, the ratio of the average particle size to the average thickness (average particle size:average thickness) is preferably 5:1 to 1000:1.

A synthetic resin molded article produced using masterbatches containing such aluminum particles has a highly bright and glittering granular appearance which is similar to the appearance of a molded article coated with aluminum.

The term "average particle size of the aluminum particles" as used herein refers to a value calculated based on the particle size distribution as measured by a conventional particle size distribution measurement method such as laser diffractometry.

The aluminum particles may be untreated aluminum particles which are not surface-treated, or surface-coated aluminum particles which are surface-treated.

The term "surface-coated aluminum particles" refers to the aluminum particles obtained by coating the surface of untreated aluminum particles with a substance such as resin, inorganic compound, organosilicon compound, coupling agent, or any other organic compound.

If the aluminum particles are surface-coated aluminum particles, the aluminum particles will exhibit higher affinity for the resin, which results in good melt tension, making strands less likely to break off. The resulting masterbatch is provided with sufficient strength and higher brightness.

It is also possible to prevent the aluminum-catalyzed oxidation of the resin and the wax in the masterbatch. Thus, a synthetic resin molded article produced using the masterbatches of the present invention can be prevented from having fisheyes and gel particles that are generated from oxidization of the resin and the wax in the masterbatch.

The surface-coated aluminum particles are not limited, but resin-coated aluminum particles are preferred. More preferably, the resin is acrylic resin, melamine resin, epoxy resin, urethane resin, or polyester resin.

In the case where the surface-coated aluminum particles are aluminum particles coated with an inorganic compound, the inorganic compound is preferably, for example, an oxide, a hydrated oxide, or a hydroxide of aluminum or silicon.

In the case where the surface-coated aluminum particles are aluminum particles coated with an organosilicon compound, the organosilicon compound is preferably, for example, an alkoxysilane compound, a chlorosilane compound, a silazane compound, a reactive silicone, or a modified silicone.

In the case where the surface-coated aluminum particles are aluminum particles coated with a coupling agent, the coupling agent is preferably, for example, a silane-based, titanate-based, aluminate-based, or zirconium-based coupling agent.

In the case where the surface-coated aluminum particles are aluminum particles coated with a different organic compound other than the organic compounds described above, the different organic compound is preferably a saturated fatty acid or an unsaturated fatty acid.

The surface-coated aluminum particles described above may be commercially available products. Examples of the surface-coated aluminum particles having a surface coated with acrylic resin include astroflake available from Hori Metal Leaf & Powder Co., Ltd.; FZ series, BP series and PCF series available from Toyo Aluminum K.K.; and TR series and HR series available from Asahi Kasei Metals Co., Ltd.

In the case where the aluminum particles are resin-coated aluminum particles, the resin for coating the aluminum may be mixed with another resin such as polyolefin resin that is mixed during masterbatch production. In such a case, the resin in the masterbatch is a mixture of the resin for coating the aluminum and the resin such as polyolefin resin. Thus, the melt flow rate of the resin in the masterbatch may be considered as the melt flow rate of the mixture. In reality; however, the resin for coating the aluminum has hardly any effect on the melt flow rate of the mixture, so that the result is substantially the same even if only taking into account the melt flow rate of the resin such as polyolefin resin that is mixed during masterbatch production. Therefore, as long as a resin having a melt flow rate of 0.2 to 60 g/10 min is used as a resin to be mixed during masterbatch production, the resin contained in the masterbatch of the present invention is considered to have a melt flow rate in the range of 0.2 to 60 g/10 min.

Examples of the surface-coated aluminum particles having a surface coated with silica include Chromashine available from Toyo Aluminum K.K.

Examples of the surface-coated aluminum particles having a surface coated with a coupling agent include LX series available from Toyo Aluminum K.K.

The masterbatch of the present invention contains a heat-resistant wetting agent.

In the production of the synthetic resin molded article, the masterbatches and the resin are heated and melt-kneaded. At this point, usually, the kneaded mixture is heated at 150°C to 250°C.

If the masterbatch contains a conventional wetting agent such as mineral turpentine, the wetting agent may be volatilized into a gas by heating. The gas generated from volatilization may impair the appearance and strength of a synthetic resin molded article.

In contrast, the masterbatch of the present invention contains a heat-resistant wetting agent, so that the heat-resistant wetting agent is hardly volatilized into a gas even when heated during melt-kneading and is thus less likely to result in a poor appearance and low strength of a synthetic resin molded article.

The heat-resistant wetting agent contained in the masterbatch of the present invention is defined as follows.

In the case of wetting agents having a boiling point, the heat-resistant wetting agent is one having a boiling point of 250°C or higher.

In the case of wetting agents that are volatilized into a gas by pyrolysis before boiling, the heat-resistant wetting agent is one having an intermediate pyrolysis temperature of 250°C or higher in a nitrogen atmosphere.

The intermediate pyrolysis temperature is a value determined according to JIS K 7120 using a thermogravimetric balance.

The heat-resistant wetting agent is selected from the group consisting of polyethylene glycols, triphenyl phosphate, bis(2-ethylhexyl)phthalate, dibutyl phthalate, bis(2-ethylhexyl) adipate, dibutyl adipate, bis(2-ethylhexyl) sebacate, and dibutyl sebacate. Polyethylene glycols are preferred among these.

The masterbatch of the present invention may contain one or a combination of two or more of the heat-resistant wetting agents.

The aluminum particles wetted by the heat-resistant wetting agent may be commercially available products. Examples include Silveeds series (aluminum particles wetted by polyethylene glycol) available from Asahi Kasei Chemicals Corporation; and No. 300 80PA (aluminum particles wetted by bis(2-ethylhexyl)phthalate) and No. 300 DOA (aluminum particles wetted by bis(2-ethylhexyl) adipate) available from Yamato Metal Powder Co., Ltd.

In addition, the intermediate pyrolysis temperature of the heat-resistant wetting agent in the wetted aluminum particles in a nitrogen atmosphere can be measured according to JIS K 7120 as is the case with the intermediate pyrolysis temperature of the heat-resistant wetting agent described above, and is substantially the same as the intermediate pyrolysis temperature measured for the wetting agent itself.

If the heat-resistant wetting agent is a polyethylene glycol, a polyethylene glycol having an intermediate pyrolysis temperature of 250°C or higher and a freezing point of -20°C or higher is preferred.

The term "freezing point" of the polyethylene glycol refers to the freezing point of a chemical product as measured according to JIS K 0065 specified in the Japanese Industrial Standards.

The weight ratio of the heat-resistant wetting agent to the aluminum particles (wetting agent:aluminum particles) is preferably 5:95 to 30:70, more preferably 5:95 to 15:85.

If the proportion of the heat-resistant wetting agent exceeds the above range, the proportion of the aluminum particles will be low, so that the masterbatch produced will fail to have a sufficiently high aluminum particle concentration, and the proportion of a resin in the masterbatch will be low. The masterbatch having a lower resin proportion tends to have low pellet strength. An excess proportion of the heat-resistant wetting agent also results in a decrease in measurability and in stable supply of the aluminum paste during masterbatch production.

If the proportion of the heat-resistant wetting agent is below the above range, the dust of the aluminum particles will easily spread in the air during masterbatch production, which may cause a dust explosion.

The masterbatch of the present invention contains a resin having a melt flow rate of 0.2 to 60 g/10 min. The melt flow rate of the resin is preferably 0.2 to 40 g/10 min, more preferably 0.2 to 30 g/10 min.

Such a resin can improve the pellet strength of each masterbatch.

If the melt flow rate of the resin is more than 60 g/10 min, the pellet strength of each masterbatch will be reduced, making the masterbatch susceptible to cracking, chipping, or the like. Thus, the masterbatches will be difficult to handle. Further, fine fragments or powder will be easily generated, which is economically disadvantageous.

If the melt flow rate of the resin is less than 0.2 g/10 min, the pellet strength of each masterbatch will be too high. Thus, these masterbatches are likely to be insufficiently kneaded during production of a synthetic resin molded article. This may cause color unevenness in a synthetic resin molded article.

The term "melt flow rate" as used herein refers to the fluidity as measured according to JIS K 7210: 1999 (ISO 1333: 1997) specified in the Japanese Industrial Standards.

The proportion of the resin having a melt flow rate of 0.2 to 60 g/10 min in the masterbatch is preferably 8 to 45% by weight, more preferably 10 to 35% by weight.

A masterbatch containing the resin having a melt flow rate of 0.2 to 60 g/10 min in a proportion of less than 8% by weight tends to have low pellet strength and exhibits markedly poor processability during its production.

A masterbatch containing the resin having a melt flow rate of 0.2 to 60 g/10 min in a proportion of more than 45% by weight fails to have a sufficiently high aluminum particle concentration. Thus, a masterbatch component other than the aluminum component is necessarily added in a large amount to produce a synthetic resin molded article. This may impair the strength or appearance of the synthetic resin molded article produced using such masterbatches.

The resin is selected from the group consisting of polyolefin resin such as polyethylene resin and polypropylene resin, polyacetal resin, polystyrene resin, acrylonitrile resin, ABS resin, PMMA resin, polycarbonate resin, PBT resin, and PET resin.

Among these, polyolefin resins such as polyethylene resin and polypropylene resin are preferred.

The melt flow rate of the resin can be measured by the method specified in JIS K 7210: 1999. For example, polyethylene resin can be measured at a test temperature of 190°C and a nominal load of 2.16 kg; polypropylene resin at a test temperature of 230°C and a nominal load of 2.16 kg; polyacetal resin at a test temperature of 190°C and a nominal load of 2.16 kg; polystyrene resin at a test temperature of 200°C and a nominal load of 5 kg; acrylonitrile resin at a test temperature of 220°C and a nominal load of 10 kg; ABS resin at a test temperature of 220°C and a nominal load of 10 kg; PMMA resin at a test temperature of 230°C and a nominal load of 3.8 kg; polycarbonate resin at a test temperature of 300°C and a nominal load of 1.2 kg; PBT resin at a test temperature of 260°C and a nominal load of 2.16 kg; and PET resin at a test temperature of 280°C and a nominal load of 5 kg.

The proportion of the wax having a melt flow rate of more than 60 g/10 min and a melt viscosity at 140°C of 15 to 8000 mPa·s in the masterbatch of the present invention is 10% by weight or less.

That the proportion of the wax in the masterbatch is 10% by weight or less means that the masterbatch does not contain any wax or that the wax content (if any) is 10% by weight or less.

The masterbatch of the present invention may contain wax. The presence of wax makes the aluminum particles compatible with the resin during masterbatch processing, allowing the aluminum particles to be uniformly dispersed.

However, if the proportion of the wax is more than 10% by weight, the pellet strength of each masterbatch will be reduced, and such wax content may impair the strength of a synthetic resin molded article produced using the masterbatches.

In addition, the wax is easily oxidized. The oxidized wax has a partially modified molecular chain, and thus has poor compatibility with the resin and poor diffusibility. Thus, the masterbatches will not be uniformly dispersed during synthetic resin molded article formation, which may cause the generation of fisheyes and gel particles on the surface of the synthetic resin molded article.

The proportion of the wax in the masterbatch is not limited as long as it is 10% by weight or less; however, it is preferably 0.00001 to 5.0% by weight, more preferably 0.1 to 3.0% by weight.

The term "wax" as used herein refers to a low-density, low-crystalline resin having a melt-starting temperature of 40°C or higher, a melt flow rate of more than 60 g/10 min as measured under conditions of a temperature of 190°C and a load of 2.16 kg, and a melt viscosity at 140°C of 15 to 8000 mPa·s.

The melt-starting temperature can be measured by differential scanning calorimetry (DSC) according to JIS K 7121.

The melt viscosity can be measured with a Brookfield viscometer.

The wax is selected from the group consisting of polyethylene wax, polypropylene wax, paraffin wax, microcrystalline wax, Fischer-Tropsch wax, carnauba wax, and products obtained by modifying these waxes with acid such as maleic acid or carboxylic acid.

The melt flow rate of these waxes can be measured by the method specified in JIS K 7210: 1999. For example, polyethylene wax can be measured at a test temperature of 190°C and a nominal load of 2.16 kg; polypropylene wax at test temperature of 190°C and a nominal load of 2.16 kg; paraffin wax at a test temperature of 190°C and a nominal load of 2.16 kg; microcrystalline wax at a test temperature of 190°C and a nominal load of 2.16 kg; Fischer-Tropsch wax at a test temperature of 190°C and a nominal load of 2.16 kg; and carnauba wax at a test temperature of 190°C and a nominal load of 2.16 kg.

In the case of using another wax, the melt flow rate can be measured at a test temperature of 190°C and a nominal load of 2.16 kg.

The masterbatch of the present invention containing the above described elements has high pellet strength.

If the pellet strength is high, the amount of fine powder to be generated from broken masterbatches due to vibration, contact, or the like will be small. Thus, the pellets will have a uniform shape, and the masterbatches are less likely to be non-uniformly dispersed during synthetic resin molded article processing. As a result, it is possible to suppress color unevenness attributable to non-uniform dispersion of the masterbatches during synthetic resin molded article processing.

Preferably, the masterbatch of the present invention contains a melt tension improver. Owing to the presence of the melt tension improver, the masterbatches having a uniform pellet shape can be easily obtained. The melt tension improver includes a fluorine-based melt tension improver and an acrylic melt tension improver, with the fluorine-based melt tension improver being preferred.

Examples of the fluorine-based melt tension improver include polytetrafluoroethylene (product name "Fluon PTFE CD145E" available from AGC, and product name "Polyflon FA-500H" available from Daikin Industries, Ltd.), and composites formed from polytetrafluoroethylene and an alkyl methacrylate-alkyl acrylate copolymer (product names "Metablen A3000" and "Metablen A3800" available from Mitsubishi Rayon Co., Ltd.). Examples of the acrylic melt tension improver include alkyl methacrylate copolymers (product names "Metablen P530" and "Metablen P570" available from Mitsubishi Rayon Co., Ltd.).

The proportion of the melt tension improver in the masterbatch is preferably 0.1 to 5.0% by weight, more preferably 0.3 to 3.0% by weight.

Preferably, in the masterbatch of the present invention, the resin contains a high melt tension resin having a melt tension at 190°C of 30 to 200 mN. If the resin contains a high melt tension resin, the masterbatches having a uniform pellet shape can be easily obtained. Masterbatches having a uniform pellet shape are less likely to be non-uniformly dispersed during production of a synthetic resin molded article using these masterbatches, making it possible to prevent color unevenness. In addition, such masterbatches are easy to handle during production of a synthetic resin molded article.

The term "high melt tension resin" as used herein refers to a resin having a melt tension at 190°C of 30 to 200 mN.

The melt tension at 190°C of the high melt tension resin is preferably 30 to 200 mN, more preferably 50 to 200 mN.

Examples of the high melt tension resin include a resin having a melt flow rate of 0.4 g/10 min and a melt tension of 88 mN (product name "HI-ZEX 6200BPU" available from Prime Polymer Co., Ltd.).

The melt tension of the resin can be measured with a capilograph.

The resin is measured under the following conditions. Measuring device: capilograph (Toyo Seiki Co., Ltd.)
Capillary inner diameter: 2.095 mm
Capillary length: 8.0 mm
Measurement temperature: 190°C
Extrusion rate: 10 mm/min
Haul-off speed: 5 m/min

Preferably, in the masterbatch of the present invention, the resin is a polymer alloy having a melt tension at 190°C of 20 to 100 mN. If the resin is such a polymer alloy, the balance between melt flow rate and melt tension can be easily adjusted, and the masterbatches having a uniform pellet shape can be easily obtained. In addition, various characteristics can be imparted to the masterbatch by the selection of resin.

The polymer alloy is not limited, but preferably, it includes any combination of resins selected from high melt tension polyethylene, polyethylene resin, polypropylene resin, ethylene-vinyl acetate copolymer, and ethylene-acrylic acid copolymer. Among these, a combination of high melt tension polyethylene, polyethylene resin, and polypropylene resin is preferred. If the polymer alloy is a combination of high melt tension polyethylene, polyethylene resin, and polypropylene resin, the weight ratio of these components (high melt tension polyethylene:polyethylene resin:polypropylene resin) is preferably 10-50:10-50:10-50.

Preferably, the masterbatch of the present invention further contains a metal deactivator. The presence of the aluminum in the masterbatch makes the resin and the wax susceptible to aluminum-catalyzed oxidation. The oxidized resin and the oxidized wax may cause the generation of fisheyes and gel particles on the surface of a synthetic resin molded article.

The presence of a metal deactivator in the masterbatch can prevent the aluminum-catalyzed oxidation of the resin and the wax.

The metal deactivator includes triazine-based compounds (1,3,5-triazine-2,4,6-triamine (product name "Adekastab ZS-27" available from ADEKA)) or phenolic compounds (2-hydroxy-N-1H-1,2,4-triazol-3-ylbenzamide (product name "Adekastab CDA-1" available from ADEKA)).

The shape of the masterbatch of the present invention is not limited. Examples include a pellet shape, a rod shape, and a spherical shape. Among these, a pellet shape is preferred. The masterbatch of the present invention having a pellet shape is described below with reference to a drawing.

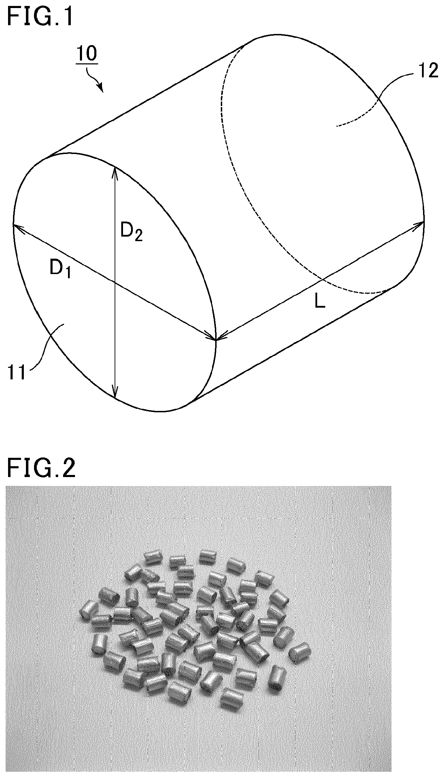

Fig. 1 is a schematic perspective view of the masterbatch of the present invention which is formed to have a pellet shape.

As shown in Fig. 1, a masterbatch 10 having a pellet shape is formed in a generally elliptical cylindrical shape and has a generally elliptical bottom 11 and a generally elliptical top 12. The bottom 11 is generally congruent with the top 12. The term "generally elliptical" as used herein includes a generally circular shape, and thus the masterbatch 10 having a pellet shape may be formed in a columnar shape.

The term "length" of the masterbatch as used herein refers to the distance (L) between the bottom 11 and the top 12. The term "major axis" of the masterbatch as used herein refers to the major axis (D1) of the bottom 11 or the top 12. The term "minor axis" of the masterbatch as used herein refers to the minor axis (D2) of the bottom 11 or the top 12. In the case where the bottom 11 and the top 12 are circle, the major axis D1 and the minor axis D2 are equal to each other.

Masterbatches having a pellet shape are less likely to vary in shape, so that the masterbatches are less likely to be non-uniformly dispersed during production of a synthetic resin molded article using these masterbatches, making it possible to prevent color unevenness.

The masterbatch of the present invention may contain any conventional additive as long as the effects of the present invention are not impaired. Examples of such additives include fillers such as talc and silica; organic pigments such as azo-based pigment, anthraquinone-based pigment, quinacridone-based pigment, phthalocyanine-based pigment, perylene-based pigment, perinone-based pigment, dioxazine-based pigment, and quinophthalone-based pigment; inorganic pigments such as titanium oxide, red oxide, ultramarine, Prussian blue, yellow iron oxide, chrome yellow, chrome bar million, and composite oxide-based pigment; pigments such as carbon black; and dispersants.

The present invention also relates to a masterbatch group including a plurality of the masterbatches of the present invention, wherein each masterbatch has a pellet shape, the plurality of the masterbatches included in the masterbatch group has a relative standard deviation of the major axis of 5.00% or less, the plurality of the masterbatches included in the masterbatch group has a relative standard deviation of the minor axis of 5.00% or less, and the plurality of the masterbatches included in the masterbatch group has a relative standard deviation of the length of 5.00% or less.

Such a masterbatch group consists of the masterbatches having a substantially uniform shape, so that color unevenness is less likely to occur in a synthetic resin molded article produced using such masterbatches.

The relative standard deviation of the major axis, the relative standard deviation of the minor axis, and the relative standard deviation of the length of the plurality of the masterbatches are not limited as long as they are in the above ranges. However, preferably, the relative standard deviation of the major axis is 3.00% or less, the relative standard deviation of the minor axis is 3.00% or less, and the relative standard deviation of the length is 3.00% or less.

Preferably, in the masterbatch group of the present invention, the average major axis of the plurality of the masterbatches included in the masterbatch group is 2.0 to 4.0 mm, an average minor axis of the plurality of the masterbatches included in the masterbatch group is 2.0 to 4.0 mm, and an average length of the plurality of the masterbatches included in the masterbatch group is 2.0 to 4.0 mm, though not limited as long as they are in the above relative standard deviation ranges. More preferably, the plurality of the masterbatches has an average major axis of 2.5 to 3.6 mm, an average minor axis of 2.5 to 3.6 mm, and an average length of 2.5 to 3.6 mm.

Such masterbatches having the above size are easy to handle during production of a synthetic resin molded article.

An example of the method for producing the masterbatch of the present invention is described below.

### (a) Aluminum paste preparing step

First, an aluminum paste is prepared by wetting aluminum particles by a heat-resistant wetting agent.

Aluminum particles in powder form (hereinafter also referred to as "aluminum powder") are very easily oxidized, and the spread of dust caused by scattering of the aluminum powder in the air may cause a dust explosion. Thus, a wetting agent such as mineral turpentine is usually applied to suppress scattering of the aluminum powder before use. However, if a low-boiling wetting agent such as mineral turpentine is used as the wetting agent for the aluminum powder, a gas will be easily generated by volatilization from masterbatch. A synthetic resin molded article produced using the masterbatches may have poor appearance and low strength.

Thus, the wetting agent is a heat-resistant wetting agent.

The aluminum particles may be untreated aluminum particles that are not surface-treated, or may be surface-coated aluminum particles that are surface-treated.

If the aluminum particles are surface-coated aluminum particles, wearing of the aluminum metal portions of the aluminum particles can be prevented in the later-described mixing step (b), which otherwise occurs due to the aluminum particles come to contact with each other. Wearing of the aluminum metal portions of the aluminum particles reduces the brightness of the aluminum particles, thus reducing the brightness of the masterbatch as well. However, if the aluminum particles are surface-coated aluminum particles, wearing of the aluminum metal portions of the aluminum particles can be prevented, so that a reduction in the brightness of the masterbatch produced through the subsequent steps can be prevented.

The surface-coated aluminum particles are not limited, but they are preferably resin-coated aluminum particles. If the surface-coated aluminum particles are resin-coated aluminum particles, the aluminum particles will exhibit higher affinity for the resin in the later-described mixing step. As a result, the masterbatch containing the resin-coated aluminum particles is provided with sufficient strength, and strands thereof are less likely to break off and have good melt tension.

The resin-coated aluminum particles have been described so that the description thereof is omitted here.

The method for wetting aluminum particles by a heat-resistant wetting agent is not limited. For example, any known mixer such as a ball mill, Proshare mixer, Nauta mixer, tumbler mixer, or Henschel mixer can be used.

The weight ratio of the aluminum particles to the heat-resistant wetting agent (heat-resistant wetting agent:aluminum particles) in the aluminum paste is preferably 5:95 to 30: 70, more preferably 5:95 to 15:85.

If the proportion of the heat-resistant wetting agent exceeds the above range, the proportion of the aluminum particles will be low, so that the masterbatch produced will fail to have a sufficiently high aluminum particle concentration, and the proportion of a resin in the masterbatch will be low. The masterbatch having a lower resin proportion tends to have low pellet strength. An excess proportion of the heat-resistant wetting agent also results in a decrease in measurability and in stable supply of the aluminum paste during masterbatch production.

If the proportion of the heat-resistant wetting agent is below the above range, the dust of the aluminum particles will easily spread in the air during masterbatch production, which may cause a dust explosion.

### (b) Mixing step

Subsequently, the aluminum paste obtained by wetting the aluminum particles by the heat-resistant wetting agent is mixed with a resin having a melt flow rate of 0.2 to 60 g/10 min and optionally a wax, to prepare an aluminum-resin mixture in which the proportion of aluminum particles is 50 to 80% by weight, and the proportion of wax having a melt flow rate or more than 60 g/10 min and a melt viscosity at 140°C of 15 to 8000 mPa·s is 10% by weight or less.

In the mixing step, additives such as a melt tension improver and a metal deactivator may be mixed together. Preferred examples of the melt tension improver and the metal deactivator include those described above for the masterbatch of the present invention.

The resin to be used in the mixing step may be a single resin or a polymer alloy containing a mixture of two or more resins. The resin to be used in the mixing step may also be a high melt tension resin having a melt tension at 190°C of 30 to 200 mN.

If the resin is a polymer alloy containing two or more resins, the melt tension at 190°C is preferably 20 to 100 mN. A preferred resin combination of the polymer alloy may be one described above for the case where the resin in the masterbatch of the present invention is a polymer alloy.

Preferably, in the method for producing the masterbatch of the present invention, the mixing step is carried out without using a stirring member.

The stirring member refers to a member such as a stirring blade or a stirring bar that comes to physical contact with the aluminum paste and the resin for kneading. Use of such a stirring member causes wearing of the aluminum particles in the aluminum paste due to contact with the stirring member. Wearing of the aluminum particles reduces the brightness of the aluminum particles. This leads to a reduction in the brightness of the masterbatch produced through the subsequent steps.

The method for mixing the aluminum paste and the resin without using a stirring member is not limited. Examples include mixing by rotating a container and mixing by oscillating a container. Use of these methods allows the aluminum paste and the resin to be mixed together without wearing of the aluminum particles in the aluminum paste.

The mixing temperature is not limited. However, the mixing step in the method for producing the masterbatch of the present invention is preferably carried out at 80°C or lower, more preferably at 60°C or lower.

With the mixing temperature in the above range, heat-induced oxidation of the resin and the wax can be prevented. As a result, it is possible to prevent the generation of fisheyes and gel particles on the surface of a synthetic resin molded article produced using the masterbatches produced through the subsequent steps.

It is also possible to prevent the aluminum particles from being broken by shear strength applied thereto during melting of the resin and the wax. This makes it possible to process the masterbatch while retaining the inherent brightness of the aluminum particles.

Preferably, the aluminum-resin mixture has a melt tension at 230°C of 30 to 150 mN. Such an aluminum-resin mixture can be suitably extruded in the later-descried extruding step (c).

The method for adjusting the melt tension is not limited. Examples include a method in which a melt tension improver is added, a method in which a high melt tension resin having a melt tension at 190°C of 30 to 200 mN is added, and a method in which two or more resins are mixed together to obtain a polymer alloy.

### (c) Extruding step

Subsequently, the aluminum-resin mixture obtained in the above step is extruded.

Extrusion is a process where the aluminum-resin mixture is pushed out from a die using a pushing member such as a screw so as to mold the aluminum-resin mixture into a specific shape.

The extruding temperature is not limited. However, the extruding step in the method for producing the masterbatch of the present invention is preferably carried out at 150°C to 250°C, more preferably at 160°C to 230°C. Extrusion at a temperature in the above range causes the resin in the aluminum-resin mixture to quickly melt. Once the resin is melted, wearing of the aluminum particles due to contact with a screw or the like can be prevented. Thus, it is possible to improve the brightness of the masterbatch produced through the subsequent steps.

### (d) Cutting step

Subsequently, the aluminum-resin mixture extruded in the above step is cut.

The cutting method is not limited, but preferably, the aluminum-resin mixture is cut into a pellet shape. Examples of such a cutting method include a strand cutting method.

The masterbatch of the present invention can be produced through the above steps.

### (Synthetic resin molded article)

The masterbatch or the masterbatch group of the present invention is kneaded into a synthetic resin in an appropriate manner, whereby a synthetic resin molded article can be suitably produced. In other words, the synthetic resin molded article of the present invention is produced using the masterbatch or the masterbatch group of the present invention.

The synthetic resin is not limited. Examples include olefin resins such as polyethylene resin and polypropylene resin and thermoplastic resins such as polystyrene resin, ABS resin, polyamide resin, polyethylene terephthalate, and polybutylene terephthalate.

The amount of the masterbatches in the synthetic resin is preferably 0.1 to 10.0% by weight, more preferably 0.3 to 5.0% by weight. If the amount of the masterbatches is in the range of 0.1 to 10.0% by weight, the amount of a masterbatch component other than the aluminum component in a synthetic resin molded article will be sufficiently small. Thus, the synthetic resin molded article is prevented from having low strength or a poor appearance.

### EXAMPLES

The present invention is described in further detail below with reference to examples.

### (Example 1)

A masterbatch according to Example 1 was produced by the following procedure.

### (a) Aluminum paste preparing step

An aluminum paste (product name "Silveeds M100-BP" available from Asahi Kasei Chemicals Corporation) containing aluminum particles (average particle size: 10 µm, average thickness: 0.2 µm, shape: coin shape) and a polyethylene glycol at a weight ratio (aluminum particles:polyethylene glycol) of 90:10 was provided.

The intermediate pyrolysis temperature of the aluminum paste in a nitrogen atmosphere was 270°C or higher.

### (b) Mixing step

To a container rotary-type mixer (model name "Tumbler ST-50E" available from Kawata MFG Co., Ltd.) were added 77.8% by weight of the aluminum paste, 19.9% by weight of polyethylene resin (melt flow rate of 22 g/10 min (test temperature: 190°C, nominal load: 2.16 kg), product name "Novatec LJ803" available from Japan Polyethylene Corporation), 1.0% by weight of maleic acid-modified wax (melt flow rate of 9680 g/10 min (test temperature: 190°C, nominal load: 2.16 kg), melt viscosity at 140°C of 150 mPa·s, product name "Mitsui Hiwax 1105A" available from Mitsui Chemicals, Inc.), 1.0% by weight of a fluorine-based melt tension improver (an additive obtained by acrylic modification of polytetrafluoroethylene, product name "Metablen A3800" available from Mitsubishi Rayon Co., Ltd.), 0.2% by weight of an acrylic melt tension improver A (a high-molecular-weight acrylic polymer, product name "Metablen P570" available from Mitsubishi Rayon Co., Ltd.), and 0.1% by weight of a metal deactivator (N,N'-bis[3-(3,5-di-t-butyl-4-hydroxyphenyl)propionyl]hydrazine, product name "Irganox MD1024" available from BASF). These components were mixed at room temperature for 10 minutes. Thus, an aluminum-resin mixture was prepared.

### (c) Extruding step

The aluminum-resin mixture prepared in the above step was fed into an extruder (model name "TEM-37SS" available from Toshiba Machine Co., Ltd.). Subsequently, the aluminum-resin mixture was extruded at an extrusion temperature of 170°C and a screw rotation speed of 150 rpm. The extruded aluminum-resin mixture was a noodle-like molded product having a major axis of 2.9 mm and a minor axis of 2.7 mm.

### (d) Cutting step

The extruded aluminum-resin mixture obtained in the above step was cut into 2.7 mm-long pieces by strand-cut method.

The obtained pellet-shaped product is a masterbatch according to Example 1, and a group of a plurality of the masterbatches is a masterbatch group according to Example 1. Fig. 2 shows the appearance of the masterbatch group according to Example 1. Fig. 2 is an image of the masterbatch group according to Example 1.

### (Example 2) to (Example 7)

Masterbatches according to Example 2 to Example 7 were produced in the same manner as in Example 1 except that the masterbatch composition was changed as shown in Table 1.

The numbers in the composition shown in Table 1 represent the percentage by weight.

In Table 1, the acrylic melt tension improver B is a high-molecular-weight acrylic polymer (product name "Metablen P530" available from Mitsubishi Rayon Co., Ltd.); the polypropylene resin is polypropylene (product name "H-700" available from Prime Polymer Co., Ltd) having a melt flow rate of 8.0 g/10 min (test temperature: 230°C, nominal load: 2.16 kg) and a melt tension at 190°C of 18.6 mN; and the high melt tension polyethylene is polyethylene (product name "HI-ZEX 6200BPU" available from Prime Polymer Co., Ltd) having a melt flow rate of 0.4 g/10 min (test temperature: 190°C, nominal load: 2.16 kg) and melt tension at 190°C of 88 mN.

### (Example 8)

A masterbatch according to Example 8 was produced by changing the aluminum paste to be prepared in the aluminum paste preparing step (a) in Example 1 as follows.

An aluminum paste containing acrylic resin-coated surface-coated aluminum particles (product name "PCF7640" available from Toyo Aluminum K.K., average particle size: 18 µm, average thickness: 0.4 µm) and a polyethylene glycol at a weight ratio (aluminum particles:polyethylene glycol) of 90:10 was prepared.

### (Comparative Example 1)

A masterbatch according to Comparative Example 1 was produced in the same manner as in Example 1 except that the masterbatch composition was changed as shown in Table 1.

In Table 1, the polyethylene wax is polyethylene (product name "Hiwax NL900" available from Mitsui Chemicals, Inc.) having a melt flow rate of 4840 g/10 min (test temperature: 190°C, nominal load: 2.16 kg) and a melt viscosity at 140°C of 7400 mPa·s.

### (Comparative Example 2)

A masterbatch according to Comparative Example 2 was produced by changing the process including mixing step (b) to the cutting step (d) in the Example 1 to the process described below. The masterbatch composition according to Comparative Example 2 is the same as that according to Comparative Example 1.

First, the raw materials in proportions shown in Table 1 were kneaded using a universal stirrer at a heating temperature of 160°C to produce an aluminum-resin mixture.

Subsequently, the obtained aluminum-resin mixture was pre-crushed using a crusher, and a cylindrical pellet-shaped product having a diameter of 2.0 mm and a length of 7.8 mm, i.e., a masterbatch, was produced using a disk pelletizer (model name "Disk Pelleter F60" available from Dalton Co., Ltd.).

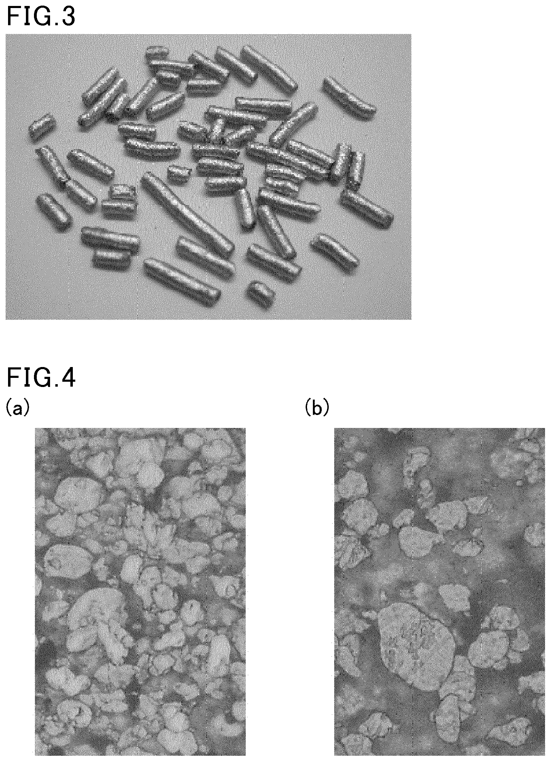

The obtained cylindrical pellet-shaped product is the masterbatch according to Comparative Example 2, and a group of a plurality of the masterbatches is a masterbatch group according to Comparative Example 2. Fig. 3 shows the appearance of the masterbatch group according to Comparative Example 2. Fig. 3 is an image of the masterbatch group according to Comparative Example 2.

### (Processability evaluation)

The masterbatches according to Examples 1 to 8 and Comparative Example 1 were evaluated for the processability. The evaluation was based on the following criteria.

### 1. Extrusion evaluation

Good: Extrusion can be carried out without any trouble. The discharge state is stable.
Fair: Extrusion can be carried out with some trouble.
Poor: Extrusion is difficult to carry out and the melt cannot be discharged from the die.

### 2. Strand state evaluation

Good: Strands are strong and do not break off.
Fair: Strands are slightly weak and break off occasionally. Poor: The mixture cannot be extruded into strands.

### 3. Cutting evaluation

Good: Cutting hardly produces any chips, and the pellet shape is uniform.
Fair: Cutting produces a small amount of chips, but the pellet shape is uniform.
Poor: Cutting produces a large amount of chips, and the pellet shape is not uniform.

### 4. Comprehensive evaluation

Very good: All the items of the extrusion evaluation, strand state evaluation, and cutting evaluation are rated "Good".
Good: Two items out of the extrusion evaluation, strand state evaluation, and cutting evaluation are rated "Good", and none of these items are rated "Poor".
Fair: One item out of the extrusion evaluation, strand state evaluation, and cutting evaluation is rated "Good", and none of these items are rated "Poor".
Poor: None of the items of the extrusion evaluation, strand state evaluation, and cutting evaluation are rated "Good", or one or more items are rated "Poor".

The masterbatches according to Examples 1 to 3 and 8 exhibited particularly excellent processability. The masterbatches according to Example 4 to 7 exhibited excellent processability.

In contrast, the masterbatches according to Comparative Example 1 exhibited poor processability. The reason is presumably that each masterbatch failed to have sufficient pellet strength due to a high proportion of the wax having a melt flow rate of more than 60 g/10 min and a melt viscosity at 140°C of 15 to 8000 mPa·s, and thus the specific shape could not be maintained in the extruding step or the cutting step.

### (Melt tension)

The masterbatches according to Examples 1 to 8 and Comparative Example 2 were evaluated for the melt tension. Evaluation was carried out as follows. Table 1 shows the results.
Measuring device: capilograph (Toyo Seiki Co., Ltd.)
Capillary inner diameter: 2.095 mm
Capillary length: 8.0 mm
Measurement temperature: 230°C
Extrusion rate: 100 mm/min
Haul-off speed: 3.3 m/min

The melt tension of the masterbatches according to Examples 1 to 8 was 30 to 110 mN.

The value of the melt tension of the masterbatch indicates that the molten masterbatch has sufficient strength and is suitable for masterbatch production by extrusion.

In contrast, in the case of the masterbatch according to Comparative Example 2, the molten strands were broken so that the melt tension could not be measured.

Breakage of the molten strands indicates that the molten masterbatch is weak and is not suitable for masterbatch production by extrusion.

Further, in the case of the masterbatch in which the molten strands are likely to break, the pellet shape tends to be non-uniform and the pellet strength tends to be low. In the case where such masterbatches are used to produce a synthetic resin molded article, color unevenness easily occurs in the synthetic resin molded article because the masterbatches tend to be non-uniformly dispersed.

### (Brightness evaluation)

The masterbatches according to Examples 1 to 8 and Comparative Example 2 were evaluated for the brightness.

The brightness was evaluated as follows.

First, these masterbatch groups were separately kneaded into polyethylene resin in such a manner that the amount of the aluminum component would be 1 part by weight relative to 100 parts by weight of polyethylene resin, and a 0.5 mm-thick sheet-like synthetic resin molded article was formed.

Subsequently, a spectrophotometer (model name "CM3600d" produced by Konica Minolta, Inc.) was used to measure the lightness L* of the synthetic resin molded article. Measurement was carried out under conditions specified in JIS Z 8722 and JIS Z 8729. Table 1 shows the results.

The synthetic resin molded article using the masterbatches according to Examples 1 to 8 had higher brightness than the synthetic resin molded article using the masterbatch according to Comparative Example 2. The reason is presumably that the aluminum particles in the masterbatch according to Comparative Example 2 were broken or bent during masterbatch production.

### (Fisheye and Gel Particle generation evaluation)

The masterbatches according to Examples 1 to 8 and Comparative Example 2 were evaluated for the generation of fisheyes and gel particles. For evaluation, an injection (INJ) plate was produced with an injection molding device, and fisheyes and gel particles were observed.

The INJ plate was produced by the following method.

First, these masterbatch groups were separately fed together with polypropylene resin into an injection molding device in such a manner that the amount of the aluminum component would be 1 part by weight relative to 100 parts by weight of polypropylene resin. The polypropylene resin and each masterbatch group were heated at 210°C into a melt-kneaded mixture in an injection unit of the injection molding device. Subsequently, the melt-kneaded mixture was injected from the injection unit into a die (size: 50.0 × 90.0 × 3.0 mm) of the injection molding device. The die was set at 30°C and the injected melt-kneaded mixture was cooled and solidified. The thus-obtained molded product is an INJ plate.

The number of fisheyes and gel particles formed on the surface of 10 INJ plates obtained by the above method was visually checked to evaluate the generation of fisheyes and gel particles.

The fisheyes and gel particles are semitransparent or white spots each having a diameter of 0.1 mm or more formed on the surface of each INJ plate. Table 1 shows the results.

The molded articles produced using the masterbatch groups according to Examples 1 to 8 had fewer fisheyes and gel particles than the molded article produced using the masterbatch group according to Comparative Example 2. In particular, the molded article of Example 8 which had two fisheyes and gel particles exhibited the best result among all of the examples.

The masterbatch according to Comparative Example 2 contains a large amount of wax. The wax is easily oxidized. The oxidized wax has a partially modified molecular chain, and thus has poor compatibility with the resin and poor diffusibility. Thus, the masterbatches will not be uniformly dispersed during synthetic resin molded article formation, which may cause the generation of fisheyes and gel particles on the surface of the synthetic resin molded article.

In addition, the masterbatch production according to Comparative Example 2 involves a heat-mixing step with a universal stirrer and a pellet molding step with a disk pelletizer. A heating treatment and a dispersion process are carried out in each of these two steps. These two steps also facilitate oxidation of the wax and the like, which may cause the generation of fisheyes and gel particles on the surface of the synthetic resin molded article.

The INJ plate produced using the masterbatch group according to Comparative Example 2 had many fisheyes and gel particles. The reason is presumably that the wax and the like in the masterbatch were oxidized during masterbatch production and during synthetic resin molded article formation due to the phenomena described above.

### (Evaluation of the shape of aluminum particles)

The shape of the aluminum particles in the masterbatches according to Example 1 and Comparative Example 2 were evaluated.

The shape of the aluminum particles was evaluated by microscopically observing the surface of the INJ plates produced for the fisheye and gel particle generation evaluation.

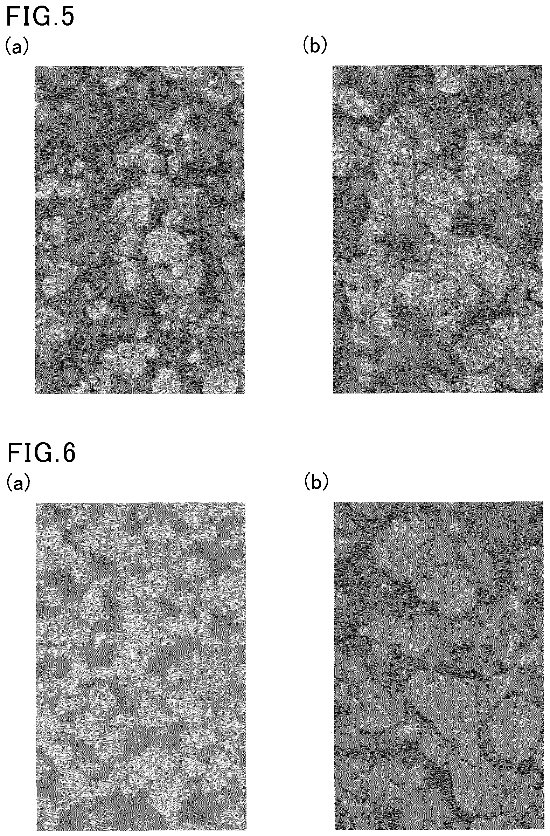

Fig. 4 and Fig. 5 show the results. Fig. 6 shows the shape of the aluminum particles in the aluminum paste for comparison.

Fig. 4(a) is a 1000 times magnified microscopic image of the shape of the aluminum particles in a synthetic resin molded article produced using the masterbatches according to Example 1. Fig. 4(b) is a 3000 times magnified image.

Fig. 5(a) is a 1000 times magnified microscopic image of the shape of the aluminum particles in a synthetic resin molded article formed using the masterbatches according to Comparative Example 2. Fig. 5(b) is a 3000 times magnified image.

Fig. 6(a) is a 1000 times magnified microscopic image of the shape of the aluminum particles in the aluminum paste. Fig. 6(b) is a 3000 times magnified image.

As is clear from Fig. 4(a) and Fig. 4(b), in the case of the synthetic resin molded article produced using the masterbatches according to Example 1, the aluminum particles had a uniform shape and were not agglomerated. In contrast, as is clear from Fig. 5(a) and Fig. 5(b), in the case of the synthetic resin molded article produced using the masterbatches according to Comparative Example 2, the aluminum particles were broken, had a non-uniform shape, and were agglomerated by overlapping.

### (Strength evaluation)

The masterbatch groups according to Examples 1 to 8 and Comparative Example 2 were evaluated for the strength.

The strength was evaluated by the following method.

First, each masterbatch group (33.3 g) was placed on a sieve having an opening of 1000 µm and an inner diameter of 75 mm. Subsequently, the sieve was shaken by a horizontal rotary sieve shaker "MVS-1" available from AS ONE Corporation at a frequency of 1500 rpm for 10 minutes.

Subsequently, the mass was measured for each masterbatch group after shaking to determine the mass decrease rate of the masterbatches. Table 1 shows the results.

If cracking or chipping occurs in the masterbatches during the shaking and fragments of the masterbatches pass through the sieve, the mass of the masterbatch group will decrease. In other words, if the masterbatches have low pellet strength and are susceptible to cracking or chipping, the mass decrease rate of the masterbatches will be high.

As shown in Table 1, the masterbatch group of Comparative Example 2 exhibited a higher mass decrease rate than the masterbatch groups according to Examples 1 to 8. In other words, according to the results, the masterbatches included in the masterbatch group of Comparative Example 2 had low pellet strength. The reason is presumably that each masterbatch failed to have sufficient pellet strength due to a high proportion of the wax having a melt flow rate of more than 60 g/10 min and a melt viscosity at 140°C of 15 to 8000 mPa·s.

### (Pellet shape variation evaluation)

The average values and the relative standard deviation and relative standard deviation of the major axis, minor axis, and length of the pellets of the masterbatch groups according to Examples 1 to 8 and Comparative Example 2 were calculated. Table 1 shows the results.

The masterbatch groups according to Examples 1 to 8 exhibited low variation with low relative standard deviations of the major axis, minor axis, and length of the pellets.

The masterbatch group according to Comparative Example 2 exhibited high variation with a high relative standard deviation of the length of the pellets while the relative standard deviations of the major axis and the minor axis of the pellets were low.

**[Table 1]**

| | | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|---|
| Aluminum paste | Aluminum particles | Not surface-coated | 70.0 | 70.0 | 70.0 | 70.0 | 70.0 | 72.0 | 74.0 | - | 70.0 | 70.0 |
| | | Surface-coated | - | - | - | - | - | - | - | 70.0 | - | - |
| | Polyethylene glycol | | 7.8 | 7.8 | 7.8 | 7.8 | 7.8 | 8.0 | 8.2 | 7.8 | 7.8 | 7.8 |
| Resin | Polyethylene resin | | 19.9 | 202 | 19.3 | - | 7.0 | 17.9 | 15.7 | 19.9 | 4.2 | 4.2 |
| | Polypropylene resin | | - | - | - | - | 6.8 | - | - | - | - | - |
| | High melt tension polyethylene | | - | - | - | 21.1 | 68 | - | - | - | - | - |
| Wax | Maleic acid-modified polyethylene wax | | 1.0 | 1.0 | 1.0 | 1.0 | 1.0 | 1.0 | 1.0 | 1.0 | 1.0 | 1.0 |
| | Polyethylene wax | | - | - | - | - | - | - | - | - | 16.9 | 16.9 |
| Melt tension improver | Fluorine-based melt tension improver | | 10 | 0.7 | 5 | - | - | 10 | 10 | 10 | - | - |
| | Acrylic melt tension improver A | | 02 | 0.2 | 0.3 | - | - | - | - | 0.2 | - | - |
| | Acrylic melt tension improver B | | - | - | - | - | 0_{.}5 | - | - | - | - | - |
| Metal deactivator | | | 0.1 | 0.1 | 0.1 | 0.1 | 0.1 | 0.1 | 0.1 | 0.1 | 0.1 | 0.1 |
| Processability evaluation | Extrusion evaluation | | Good | Good | Good | Good | Good | Good | Good | Good | Fair | - |
| | Strand state evaluation | | Good | Good | Good | Good | Good | Good | Good | Good | Poor | - |
| | Cutting evaluation | | Good | Good | Good | Fair | Fair | Fair | Fair | Good | Poor | - |
| | Comprehensive evaluation | | Very good | Very good | Very good | Good | Good | Good | Good | Very good | Poor | - |
| Melt tension | (mN) | | 85 | 78 | 103 | 38 | 40 | 87 | 90 | 105 | - | 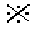 Unmeasurable |
| Brightness evaluation | (L*) | | 77.5 | 77.2 | 77.3 | 77.2 | 77.5 | 77.2 | 77.3 | 77.0 | - | 75.2 |
| Fisheye and Gel Particle generation evaluation | (pieces) | | 4 | 4 | 4 | 3 | 4 | 5 | 5 | 2 | - | 45 |
| Strength evaluation | Mass decrease rate after shaking the sieve (%) | | 0.0132 | 0.0211 | 0.0122 | 0.0275 | 0.0285 | 0.0362 | 0.0422 | 0.0101 | - | 1.225 |
| Variation evaluation | Average of pellet major axis (mm) | | 2.89 | 2.92 | 2.85 | 2.90 | 2.93 | 2.92 | 2.92 | 2.91 | - | 2.01 |
| | Standard deviation of pellet major axis (mm) | | 0.0433 | 0.0538 | 0.0311 | 0.0537 | 0.0525 | 0.0388 | 0.0452 | 0.0378 | - | 0.0511 |
| | Relative standard deviation of pellet major axis (%) | | 1.4982 | 1.8424 | 1.0912 | 1.8517 | 1.7918 | 1.3288 | 1.5479 | 1.2990 | - | 2.5422 |
| | Average of pellet minor axis (mm) | | 2.68 | 2.70 | 2.72 | 2.68 | 2.71 | 2.70 | 2.70 | 2.70 | - | 2.01 |
| | Standard deviation of pellet minor axis (mm) | | 0.0404 | 0.0502 | 0.0366 | 0.0501 | 0.0490 | 0.0499 | 0.0489 | 0.0369 | - | 0.0512 |
| | Relative standard deviation of pellet minor axis (%) | | 1.5075 | 1.8593 | 1.3456 | 1.8694 | 1.8081 | 1.8481 | 1.8111 | 1.3667 | - | 2.5473 |
| | Average of pellet length (mm) | | 2.66 | 2.88 | 2.80 | 2.62 | 2.61 | 2.61 | 2.60 | 2.70 | - | 7.76 |
| | Standard deviation of pellet length (mm) | | 0.0490 | 0.0505 | 0.0390 | 0.0510 | 0.0450 | 0.0422 | 0.0478 | 0.0345 | - | 2.7922 |
| | Relative standard deviation of pellet length (%) | | 1.8421 | 1.7535 | 1.3929 | 1.9466 | 1.7241 | 1.6169 | 1.8385 | 1.2778 | - | 35.9820 |

| | | | | | | | | | | | | |
|---|---|---|---|---|---|---|---|---|---|---|---|---|
| 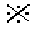 Unmeasurable due to rupture of the molten strand | | | | | | | | | | | | |

### REFERENCE SIGNS LIST

- 10: Masterbatch
- 11: Bottom
- 12: Top

## Claims

1. A masterbatch comprising:
aluminum particles;
a heat-resistant wetting agent;
a resin; and
optionally a wax,
wherein the proportion of the aluminum particles in the masterbatch is 50 to 80% by weight,
the resin has a melt flow rate of 0.2 to 60 g/10 min, and
the proportion of wax having a melt flow rate of more than 60 g/10 min and a melt viscosity at 140°C of 15 to 8000 mPa·s in the masterbatch is 10% by weight or less, wherein
in the case of the heat-resistant wetting agent having a boiling point, the heat-resistant wetting agent is one having a boiling point of 250 °C or higher,
in the case of the heat-resistant wetting agent that are volatilized into a gas by pyrolysis before boiling, the heat-resistant wetting agent is one having an intermediate pyrolysis temperature of 250 °C or higher in a nitrogen atmosphere, wherein the intermediate pyrolysis temperature is determined according to JIS K 7120 using a thermogravimetric balance,
wherein the resin is selected from the group consisting of polyolefin resin, polyacetal resin, polystyrene resin, acrylonitrile resin, ABS resin, PMMA resin, polycarbonate resin, PBT resing, and/or PET resin,
the wax is selected from the group consisting of polyethylene wax, polypropylene wax, paraffin wax, microcrystalline wax, Fischer-Tropsch wax and carnauba wax, and/or products obtained by modifying these waxes with acid, and the heat-resistant wetting agent is selected from the group consisting of polyethylene glycols, triphenyl phosphate, bis(2-ethylhexyl)phthalate, dibutyl phthalate, bis(2-ethylhexyl)adipate, dibutyl adipate, bis(2-ethylhexyl)sebacate and dibutyl sebacate, wherein
the melt flow rate is measured according to JIS K 7210: 1999 (ISO 1333: 1997) at a temperature of 190°C and a load of 2.16 kg and the melt viscosity is measured with a Brookfield viscometer at a temperature of 140°C.

2. The masterbatch according to claim 1,
wherein the aluminum particles are surface-coated aluminum particles.

3. The masterbatch according to claim 1 or 2 further comprising a melt tension improver which is selected from the group consisting of a fluorine-based melt tension improver and/or an acrylic melt tension improver.

4. The masterbatch according to any one of claims 1 to 3,
wherein the resin contains a high melt tension resin having a melt tension at 190°C of 30 to 200 mN, wherein the melt tension of the resin is measured with a capilograph under the following conditions:
Measuring device: capilograph,
Capillary inner diameter: 2.095 mm,
Capillary length: 8.0 mm,
Measurement temperature: 190 °C,
Extrusion rate: 10 mm/min
Haul-off speed: 5 m/min.

5. The masterbatch according to any one of claims 1 to 4,
wherein the resin is a polymer alloy having a melt tension at 190°C of 20 to 100 mN, wherein
the melt tension of the resin is measured with a capilograph under the following conditions:
Measuring device: capilograph,
Capillary inner diameter: 2.095 mm,
Capillary length: 8.0 mm,
Measurement temperature: 190 °C,
Extrusion rate: 10 mm/min
Haul-off speed: 5 m/min.

6. The masterbatch according to any one of claims 1 to 5 further comprising a metal deactivator selected from the group consisting of a triazine-based compound and/or a phenolic compound.

7. A masterbatch group comprising a plurality of the masterbatches according to any one of claims 1 to 6,
wherein each masterbatch has a pellet shape,
the plurality of the masterbatches included in the masterbatch group has a relative standard deviation of a major axis of 5.00% or less,
the plurality of the masterbatches included in the masterbatch group has a relative standard deviation of a minor axis of 5.00% or less, and
the plurality of the masterbatches included in the masterbatch group has a relative standard deviation of the length of 5.00% or less, wherein
the major axis of the masterbatch is the major axis of the bottom or the top,
the minor axis of the masterbatch is the minor axis of the bottom or the top, and
the length of the masterbatch is the distance between the bottom and the top.

8. The masterbatch group according to claim 7,
wherein an average major axis of the plurality of the masterbatches included in the masterbatch group is 2.0 to 4.0 mm,
an average minor axis of the plurality of the masterbatches included in the masterbatch group is 2.0 to 4.0 mm, and
an average length of the plurality of the masterbatches included in the masterbatch group is 2.0 to 4.0 mm.

9. A method for producing the masterbatch according to any one of claims 1 to 6, the method comprising:
a mixing step of mixing an aluminum paste obtained by wetting aluminum particles by a heat-resistant wetting agent with a resin having a melt flow rate of 0.2 to 60 g/10 min and optionally a wax so as to produce an aluminum-resin mixture in which the proportion of the aluminum particles is 50 to 80% by weight and the proportion of wax having a melt flow rate of more than 60 g/10 min and a melt viscosity at 140°C of 15 to 8000 mPa·s is 10% by weight or less;
an extruding step of extruding the aluminum-resin mixture; and
a cutting step of cutting the extruded aluminum-resin mixture, wherein
in the case of the heat-resistant wetting agent baving a boiling point, the heat-resistant wetting agent is one having a boiling point of 250 °C or higher,
in the case of the heat-resistant wetting agent that are volatilized into a gas by pyrolysis before boiling, the heat-resistant wetting agent is one having an intermediate pyrolysis temperature of 250 °C or higher in a nitrogen atmosphere, wherein the intermediate pyrolysis temperature is determined according to JIS K 7210 using a thermogravimetric balance,
wherein the resin is selected from the group consisting of polyolefin resin, polyacetal resin, polystyrene resin, acrylonitrile resin, ABS resin, PMMA resin, polycarbonate resin, PBT resin, and/or PET resin,
the wax is selected from the group consisting of polyethylene wax, polypropylene wax, paraffin wax, microcrystalline wax, Fischer-Tropsch wax and carnauba wax, and/or products obtained by modifying these waxes with acid, and the heat-resistant wetting agent is selected from the group consisting of polyethylene glycols, triphenyl phosphate, bis(2-ethylhexyl)phthalate, dibutyl phthalate, bis(2-ethylhexyl)adipate, dibutyl adipate, bis(2-ethylhexyl)sebacate and dibutyl sebacate, wherein
the melt flow rate is measured according to JIS K 7210: 1999 (ISO 1333: 1997) at a temperature of 190 °C and a load of 2.16 kg and the melt viscosity is measured with a Brookfield viscometer at a temperature of 140 °C.

10. The method for producing the masterbatch according to claim 9,
wherein the mixing step is carried out without using a stirring member.

11. The method for producing the masterbatch according to claim 9 or 10,
wherein the mixing step is carried out at 80°C or lower and the extruding step is carried out at 150°C to 250°C.

12. The method for producing the masterbatch according to any one of claims 9 to 11,
wherein the mixing step is carried out using surface-coated aluminum particles as the aluminum particles.

13. A synthetic resin molded article,
wherein the synthetic resin molded article is produced using the masterbatch according to any one of claims 1 to 6 or the masterbatch group according to claim 7 or 8.

## Patentansprüche

1. Masterbatch, umfassend:
Aluminiumpartikel;
ein wärmebeständiges Benetzungsmittel;
ein Harz; und
optional ein Wachs, wobei
der Anteil der Aluminiumpartikel in dem Masterbatch 50 bis 80 Gewichtsprozent beträgt,
das Harz einen Schmelzflussindex von 0,2 bis 60 g/10 min aufweist, und
der Anteil von Wachs mit einem Schmelzflussindex von mehr als 60 g/10 min und einer Schmelzeviskosität bei 140 °C von 15 bis 8000 mPa·s in dem Masterbatch 10 Gewichtsprozent oder weniger beträgt, wobei,
falls das wärmebeständige Benetzungsmittel einen Siedepunkt aufweist, das wärmebeständige Benetzungsmittel ein solches ist, das einen Siedepunkt von 250 °C oder höher aufweist,
falls das wärmebeständige Benetzungsmittel vor dem Sieden durch Pyrolyse zu einem Gas verdampft, das wärmebeständige Benetzungsmittel ein solches ist, das eine mittlere Pyrolysetemperatur von 250 °C oder höher in einer Stickstoffatmosphäre aufweist, wobei die mittlere Pyrolysetemperatur gemäß JIS K 7120 unter Verwendung einer thermogravimetrischen Waage bestimmt wird,
wobei das Harz aus der Gruppe ausgewählt ist, die aus Polyolefinharz, Polyacetalharz, Polystyrolharz, Acrylnitrilharz, ABS-Harz, PMMA-Harz, Polycarbonatharz, PBT-Harz und/oder PET-Harz besteht,
das Wachs aus der Gruppe ausgewählt ist, die aus Polyethylenwachs, Polypropylenwachs, Paraffinwachs, mikrokristallinem Wachs, Fischer-Tropsch-Wachs und Carnaubawachs und/oder Produkten, die durch Modifizieren dieser Wachse mit Säure erhalten werden, besteht, und das wärmebeständige Benetzungsmittel aus der Gruppe ausgewählt ist, die aus Polyethylenglykolen; Triphenylphosphat, Bis(2-ethylhexyl)phthalat, Dibutylphthalat, Bis(2-ethylhexyl)adipat, Dibutyladipat, Bis(2-ethylhexyl)sebacat und Dibutylsebacat besteht, wobei
der Schmelzflussindex gemäß JIS K 7210: 1999 (ISO 1333: 1997) bei einer Teperatur von 190 °C und einer Last von 2,16 kg gemessen wird und die Schmelzeviskosität mit einem Brookfield-Viskosimeter bei einer Temperatur von 140 °C gemessen wird.

2. Masterbatch gemäß Anspruch 1, wobei die Aluminiumpartikel oberflächenbeschichtete Aluminiumpartikel sind.

3. Masterbatch gemäß Anspruch 1 oder Anspruch 2, der des Weiteren einen Schmelzespannungsverbesserer umfasst, der aus der Gruppe ausgewählt ist, die aus einem auf Fluor basierenden Schmelzespannungsverbesserer und/oder einem Acryl-Schmelzespannungsverbesserer besteht.

4. Masterbatch gemäß einem der Ansprüche 1 bis 3, wobei das Harz ein Harz mit hoher Schmelzespannung enthält, das eine Schmelzespannung bei 190 °C von 30 bis 200 mN aufweist, wobei die Schmelzespannung des Harzes mittels eines Capilographen unter den folgenden Bedingungen gemessen wird:
Messvorrichtung: Capilograph,
Kapillarinnendurchmesser: 2,095 mm,
Kapillarlänge: 8,0 mm,
Messtemperatur: 190 °C,
Extrusionsrate: 10 mm/min,
Abzugsgeschwindigkeit: 5 m/min.

5. Masterbatch gemäß einem der Ansprüche 1 bis 4, wobei das Harz eine Polymerlegierung mit einer Schmelzespannung bei 190 °C von 20 bis 100 mN ist, wobei die Schmelzespannung des Harzes mittels eines Capilographen unter den folgenden Bedingungen gemessen wird:
Messvorrichtung: Capilograph,
Kapillarinnendurchmesser: 2,095 mm,
Kapillarlänge: 8,0 mm,
Messtemperatur: 190 °C,
Extrusionsrate: 10 mm/min,
Abzugsgeschwindigkeit: 5 m/min.

6. Masterbatch gemäß einem der Ansprüche 1 bis 5, der des Weiteren einen Metalldeaktivator umfasst, der aus der Gruppe ausgewählt ist, die aus einer auf Triazin basierenden Verbindung und/oder einer phenolischen Verbindung besteht.

7. Masterbatchgruppe, umfassend eine Vielzahl der Masterbatches gemäß einem der Ansprüche 1 bis 6,
wobei jeder Masterbatch eine Pelletform aufweist,
die Vielzahl der in der Masterbatchgruppe enthaltenen Masterbatches eine relative Standardabweichung hinsichtlich einer Hauptachse von 5,00 % oder weniger aufweist,
die Vielzahl der in der Masterbatchgruppe enthaltenen Masterbatches eine relative Standardabweichung hinsichtlich einer Nebenachse von 5,00 % oder weniger aufweist, und
die Vielzahl der in der Masterbatchgruppe enthaltenen Masterbatches eine relative Standardabweichung hinsichtlich der Länge von 5,00 % oder weniger aufweist, wobei
die Hauptachse des Masterbatchs die Hauptachse der Unterseite oder der Oberseite ist,
die Nebenachse des Masterbatchs die Nebenachse der Unterseite oder der Oberseite ist und
die Länge des Masterbatchs der Abstand zwischen der Unterseite und der Oberseite ist.

8. Masterbatchgruppe gemäß Anspruch 7,
wobei eine durchschnittliche Hauptachse der Vielzahl der in der Masterbatchgruppe enthaltenen Masterbatches 2,0 bis 4,0 mm beträgt,
eine durchschnittliche Nebenachse der Vielzahl der in der Masterbatchgruppe enthaltenen Masterbatches 2,0 bis 4,0 mm beträgt,
eine durchschnittliche Länge der Vielzahl der in der der Masterbatchgruppe enthaltenden Masterbatches 2,0 bis 4,0 mm beträgt.

9. Verfahren zur Herstellung des Masterbatches gemäß einem der Ansprüche 1 bis 6, wobei das Verfahren Folgendes umfasst:
eine Mischstufe des Mischens einer durch Benetzen von Aluminiumpartikeln mit einem wärmebeständigen Benetzungsmittel erhaltenen Aluminiumpaste mit einem Harz, das einen Schmelzflussindex von 0,2 bis 60 g/10 min aufweist, und optional mit einem Wachs, so dass ein Aluminium-Harz-Gemisch hergestellt wird, in dem der Anteil der Aluminiumpartikel 50 bis 80 Gewichtsprozent beträgt und der Anteil von Wachs, das einen Schmelzflussindex von mehr als 60 g/10 min und eine Schmelzeviskosität bei 140 °C von 15 bis 8000 mPa·s aufweist, 10 Gewichtsprozent oder weniger beträgt;
eine Extrusionsstufe des Extrudierens des Aluminium-Harz-Gemisches; und
eine Schneidestufe des Schneidens des extrudierten Aluminium-Harz-Gemisches, wobei,
falls das wärmebeständige Benetzungsmittel einen Siedepunkt aufweist, das wärmebeständige Benetzungsmittel ein solches ist, das einen Siedepunkt von 250 °C oder höher aufweist,
falls das wärmebeständige Benetzungsmittel durch Pyrolyse vor dem Sieden zu einem Gas verdampft, das wärmebeständige Benetzungsmittel ein solches ist, das eine mittlere Pyrolysetemperatur von 250 °C oder höher in einer Stickstoffatmosphäre aufweist, wobei die mittlere Pyrolysetemperatur gemäß JIS K 7210 unter Verwendung einer thermogravimetrischen Waage bestimmt wird,
wobei das Harz aus der Gruppe ausgewählt ist, die aus Polyolefinharz, Polyacetalharz, Polystyrolharz, Acrylnirilharz, ABS-Harz, PMMA-Harz, Polycarbonatharz, PBT-Harz und/oder PET-Harz besteht,
das Wachs aus der Gruppe ausgewählt ist, die aus Polyethylenwachs, Polypropylenwachs, Paraffinwachs, mikrokristallinem Wachs, Fischer-Tropsch-Wachs und Carnaubawachs und/oder Produkten, die durch Modifizieren dieser Wachse mit Säure erhalten werden, besteht, und das wärmebeständige Benetzungmittel aus der Gruppe ausgewählt ist, die aus Polyethylenglycolen, Triphenylphosphat, Bis(2-ethylhexyl)-phthalat, Dibutylphthalat, Bis(2-ethylhexyl)adipat, Dibutyladipat, Bis(2-ethylhexyl)sebacat und Dibutylsebacat besteht, wobei
der Schmelzflussindex gemäß JIS K 7210: 1999 (ISO 1333: 1997) bei einer Temperatur von 190 °C und einer Last von 2,16 kg gemessen wird und die Schmelzeviskosität mit einem Brookfield-Viskosimeter bei einer Temperatur von 140 °C gemessen wird.

10. Verfahren zur Herstellung des Masterbatchs gemäß Anspruch 9, wobei die Mischstufe ohne Verwendung eines Rührelements durchgeführt wird.

11. Verfahren zur Herstellung des Masterbatchs gemäß Anspruch 9 oder Anspruch 10, wobei die Mischstufe bei 80 °C oder weniger durchgeführt wird und die Extrusionsstufe bei 150 °C bis 250 °C durchgeführt wird.

12. Verfahren zur Herstellung des Masterbatchs gemäß einem der Ansprüche 9 bis 11, wobei die Mischstufe unter Verwendung von oberflächenbeschichteten Aluminiumpartikeln als Aluminiumpartikel durchgeführt wird.

13. Formkörper aus synthetischem Harz, wobei der Formkörper aus synthetischem Harz unter Verwendung des Masterbatchs gemäß einem der Ansprüche 1 bis 6 oder der Masterbatchgruppe gemäß Anspruch 7 oder Anspruch 8 hergestellt ist.

## Revendications

1. Mélange maître comprenant :
des particules d'aluminium ;
un agent de mouillage résistant à la chaleur ;
une résine ; et
éventuellement une cire,
dans lequel la proportion des particules d'aluminium dans le mélange maître est de 50 à 80 % en poids,
la résine a une vitesse d'écoulement à l'état fondu de 0,2 à 60 g/10 minutes, et
la proportion de cire ayant une vitesse d'écoulement à l'état fondu de plus de 60 g/10 minutes et une viscosité à l'état fondu à 140 °C de 15 à 8000 mPa·s dans le mélange maître est de 10 % en poids ou moins,
où
dans le cas de l'agent de mouillage résistant à la chaleur ayant un point d'ébullition, l'agent de mouillage résistant à la chaleur est un ayant un point d'ébullition de 250 °C ou plus,
dans le cas de l'agent de mouillage résistant à la chaleur qui sont volatilisés dans un gaz par pyrolyse avant l'ébullition, l'agent de mouillage résistant à la chaleur est un ayant une température de pyrolyse intermédiaire de 250 °C ou plus dans une atmosphère d'azote, où la température de pyrolyse intermédiaire est déterminée selon la norme JIS K 7120 en utilisant une balance thermogravimétrique,
où la résine est choisie dans le groupe constitué par une résine polyoléfine, une résine polyacétal, une résine polystyrène, une résine acrylonitrile, une résine ABS, une résine PMMA, une résine polycarbonate, une résine PBT et/ou une résine PET,
la cire est choisie dans le groupe constitué par la cire de polyéthylène, la cire de polypropylène, la cire de paraffine, la cire microcristalline, la cire de Fischer-Tropsch et la cire de carnauba, et/ou les produits obtenus en modifiant ces cires avec de l'acide, et l'agent de mouillage résistant à la chaleur est choisi dans le groupe constitué par les polyéthylène glycols, le triphényl phosphate, le bis(2-éthylhexyl)phtalate, le dibutyl phtalate, le bis(2-éthylhexyl)adipate, le dibutyl adipate, le bis(2-éthylhexyl)sébacate et le dibutyl sébacate, où
la vitesse d'écoulement à l'état fondu est mesurée selon la norme JIS K 7210 : 1999 (ISO 1333 : 1997) à une température de 190 °C et une charge de 2,16 kg et la viscosité à l'état fondu est mesurée avec un viscosimètre Brookfield à une température de 140 °C.

2. Mélange maître selon la revendication 1, dans lequel les particules d'aluminium sont des particules d'aluminium revêtues en surface.

3. Mélange maître selon la revendication 1 ou 2 comprenant en outre un améliorateur de tension à l'état fondu qui est choisi dans le groupe constitué par un améliorateur de tension à l'état fondu à base de fluor et/ou un améliorateur de tension à l'état fondu acrylique.

4. Mélange maître selon l'une quelconque des revendications 1 à 3,
dans lequel la résine contient une résine de tension à l'état fondu élevée ayant une tension à l'état fondu à 190 °C de 30 à 200 mN, où la tension à l'état fondu de la résine est mesurée avec un capilographe dans les conditions suivantes :
dispositif de mesure : capilographe
diamètre interne de capillaire : 2,095 mm,
longueur de capillaire : 8,0 mm,
température de mesure : 190 °C,
vitesse d'extrusion : 10 mm/minute
vitesse de tirage : 5 m/minute.

5. Mélange maître selon l'une quelconque des revendications 1 à 4,
dans lequel la résine est un alliage de polymères ayant un tension à l'état fondu à 190 °C de 20 à 100 mN, où
la tension à l'état fondu de la résine est mesurée avec un capilographe dans les conditions suivantes :
dispositif de mesure : capilographe,
diamètre interne de capillaire : 2,095 mm,
longueur de capillaire : 8,0 mm,
température de mesure : 190 °C,
vitesse d'extrusion : 10 mm/minute
vitesse de tirage : 5 m/minute.

6. Mélange maître selon l'une quelconque des revendications 1 à 5 comprenant en outre un désactivateur de métal choisi dans le groupe constitué par un composé à base de triazine et/ou un composé phénolique.

7. Groupe de mélanges maîtres comprenant une pluralité des mélanges maîtres selon l'une quelconque des revendications 1 à 6,
dans lequel chaque mélange maître a une forme de pastille,
la pluralité des mélanges maîtres compris dans le groupe de mélanges maîtres a un écart type relatif d'un axe majeur de 5,00 % ou moins,
la pluralité des mélanges maîtres compris dans le groupe de mélanges maîtres a un écart type relatif d'un axe mineur de 5,00 % ou moins,
la pluralité des mélanges maîtres comprise dans le groupe de mélanges maîtres a un écart type relatif de la longueur de 5,00 % ou moins, où
l'axe majeur du mélange maître est l'axe majeur de la partie inférieure ou de la partie supérieure,
l'axe mineur du mélange maître est l'axe mineur de la partie inférieure ou de la partie supérieure, et
la longueur du mélange maître est la distance entre la partie inférieure et la partie supérieure.

8. Groupe de mélanges maîtres selon la revendication 7,
dans lequel un axe majeur moyen de la pluralité des mélanges maîtres compris dans le groupe de mélanges maîtres est de 2,0 à 4,0 mm,
un axe mineur moyen de la pluralité des mélanges maîtres compris dans le groupe de mélanges maîtres est de 2,0 à 4,0 mm, et
une longueur moyenne de la pluralité des mélanges maîtres compris dans le groupe de mélanges maîtres est de 2,0 à 4,0 mm.

9. Procédé de production du mélange maître selon l'une quelconque des revendications 1 à 6, le procédé comprenant :
une étape de mélange de mélange d'une pâte d'aluminium obtenue en mouillant les particules d'aluminium par un agent de mouillage résistant à la chaleur ayant une vitesse d'écoulement à l'état fondu de 0,2 à 60 g/10 minutes et éventuellement une cire de manière à produire un mélange aluminium-résine dans lequel la proportion des particules d'aluminium est de 50 à 80 % en poids et la proportion de cire ayant une vitesse d'écoulement à l'état fondu de plus de 60 g/10 minutes et une viscosité à l'état fondu à 140 °C de 15 à 8000 mPa·s est de 10 % en poids ou moins ;
une étape d'extrusion d'extrusion du mélange aluminium-résine ; et
une étape de découpage de découpage du mélange aluminium-résine , où
dans le cas de l'agent de mouillage résistant à la chaleur ayant un point d'ébullition, l'agent de mouillage résistant à la chaleur est un ayant un point d'ébullition de 250 °C ou plus,
dans le cas de l'agent de mouillage qui sont volatilisés dans un gaz par pyrolyse avant l'ébullition, l'agent de mouillage résistant à la chaleur est un ayant une température de pyrolyse intermédiaire de 250 °C ou plus dans une atmosphère d'azote, où la température de pyrolyse intermédiaire est déterminée selon la norme JIS K 7210 en utilisant une balance thermogravimétrique,
où la résine est choisie dans le groupe constitué par une résine polyoléfine, une résine polyacétal, une résine polystyrène, une résine acrylonitrile, une résine ABS, une résine PMMA, une résine polycarbonate, une résine PBT et/ou une résine PET,
la cire est choisie dans le groupe constitué par une cire de polyéthylène, une cire de polypropylène, une cire de paraffine, une cire microcristalline, une cire de Fischer-Tropsch et une cire de carnauba, et/ou des produits obtenus en modifiant ces cires avec de l'acide, et l'agent de mouillage résistant à la chaleur est choisi dans le groupe constitué par les polyéthylène glycols, le triphényl phosphate, le bis(2-éthylhexyl)phtalate, le dibutyl phtalate, le bis(2-étylhexyl)adipate, le dibutyl adipate, le bis(2-éthylhexyl)sébacate et le dibutyl sébacate, où
la vitesse d'écoulement à l'état fondu est mesurée selon la norme JIS K 7210 : 1999 (ISO 1333 : 1997) à une température de 190 °C et une charge de 2,16 kg et la viscosité à l'état fondu est mesurée avec un viscosimètre Brookfield à une température de 140 °C.

10. Procédé de production du mélange maître selon la revendication 9,
dans lequel l'étape de mélange est réalisée sans utiliser d'élément d'agitation.

11. Procédé de production du mélange maître selon la revendication 9 ou 10,
dans lequel l'étape de mélange est réalisée à 80 °C ou moins et l'étape d'extrusion est réalisée à 150 à 250 °C.

12. Procédé de production du mélange maître selon l'une quelconque des revendications 9 à 11,
dans lequel l'étape de mélange est réalisée en utilisant des particules d'aluminium revêtues en surface comme particules d'aluminium.

13. Article moulé en résine synthétique,
dans lequel l'article moulé en résine synthétique est produit en utilisant le mélange maître selon l'une quelconque des revendications 1 à 6 ou le groupe de mélanges maîtres selon la revendication 7 ou 8.
